# EUROPÄISCHE PATENTSCHRIFT

(11) **EP 0 499 347 B1**
(45) Veröffentlichungstag und Bekanntmachung des Hinweises auf die Patenterteilung: **01.03.1995**
(21) Anmeldenummer: 92250005.3
(22) Anmeldetag: 08.01.1992
(51) Int. Cl.: B60R 17/02, F16N 7/38

(54) **Zentralschmieraggregat**
Central lubricating unit
Unité centralisée de lubrification

(30) Priorität: 10.01.1991 DE 4100723
(43) Veröffentlichungstag der Anmeldung: 19.08.1992
(73) Patentinhaber: Willy Vogel AG, D-12277 Berlin (DE)
(72) Erfinder: Meuer, Johannes, Dipl.-Ing., W-1000 Berlin 22 (DE); Todtenhaupt, Dieter, Ing. (Grad.), W-1000 Berlin 31 (DE); Schönherr, Dieter, W-1000 Berlin 65 (DE)
(74) Vertreter: Böning, Manfred, Dr.-Ing.

(56) Entgegenhaltungen:
- DE-A- 2 458 711
- FR-A- 2 454 578
- FR-A- 2 556 775
- GB-A- 594 787

## Beschreibung

Die Erfindung betrifft ein Zentralschmieraggregat für Fahrzeuge mit einem Schmierstoffbehälter, einer eingangsseitig mit dem Schmierstoffbehälter und ausgangsseitig mit mindestens einem Schmierstoffverteiler verbundenen Schmierstoffpumpe sowie mit Mitteln zur Druckentlastung des Schmierstoffverteilers und zur Begrenzung des von der Schmierstoffpumpe aufgebauten Druckes.

Aus der gattungsbildenden DE-AS 1 184 659 ist ein Zentralschmieraggregat der vorgenannten Art bekannt, bei dem die Mittel zur Druckentlastung der als Kolbenverteiler ausgebildeten Schmierstoffverteiler und zur Begrenzung des Maximalwertes des von der Schmierstoffpumpe aufgebauten Druckes von zwei voneinander unabhängigen Ventilen gebildet werden.

Der Erfindung liegt die Aufgabe zugrunde, ein Zentralschmieraggregat der in Betracht gezogenen Gattung zu schaffen, bei dem die beiden Funktionen der Druckentlastung von als Kolbenverteiler ausgebildeten Schmierstoffverteilern und der Druckbegrenzung im Versorgungssystem für die Schmierstoffverteiler durch ein einziges Ventil erfüllt werden. Diese Aufgabe wird erfindungsgemäß dadurch gelöst, daß die Mittel zur Druckentlastung aus einem auch zur Druckbegrenzung dienenden Ventil bestehen, das einen gegen die Wirkung einer Rückstellfeder in einer Bohrung eines Gehäuses verschiebbaren Kolben aufweist, der in einer ersten Position einen zum Schmierstoffbehälter führenden ersten Kanal mit einem zum Schmierstoffverteiler führenden zweiten Kanal, in einer zweiten Position einen zum Pumpenausgang führenden dritten Kanal unter Schließen des zum Schmierstoffbehälter führenden ersten Kanals mit dem zum Schmierstoffverteiler führenden zweiten Kanal und in einer dritten Position alle drei vorgenannten Kanäle miteinander verbindet.

Durch die Verwendung eines kombinierten Druckentlastungs- und Druckbegrenzungsventiles lassen sich die Kosten und der Raumbedarf des Zentralschmieraggregates reduzieren.

Weitere Merkmale und Einzelheiten der Erfindung ergeben sich aus den Unteransprüchen und der nachstehenden Beschreibung eines in der beigefügten Zeichnung dargestellten Ausführungsbeispiels. Es zeigen:
- Fig. 1: teilweise im Schnitt die Seitenansicht eines Zentralschmieraggregates,
- Fig. 2: einen Schnitt durch das in einem Ventilblock angeordnete kombinierte Entlastungs- und Druckbegrenzungsventil des Aggregates gemäß Fig. 1 in einer ersten Position,
- Fig. 3: ein dem Schnitt gemäß Fig. 1 entsprechender Schnitt in einer zweiten Position des Ventiles und
- Fig. 4: ein dem Schnitt gemäß Fig. 1 entsprechender Schnitt in einer dritten Position des Ventiles.

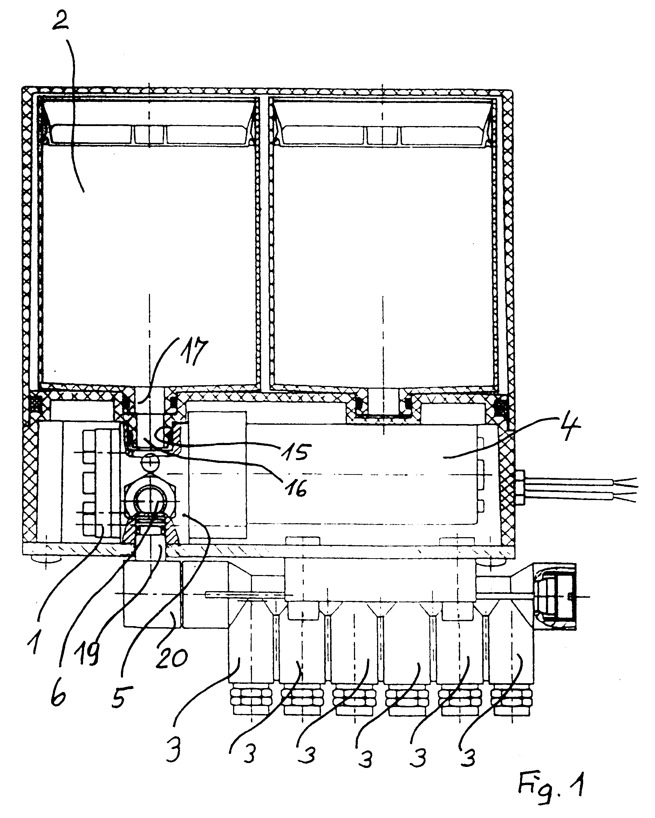

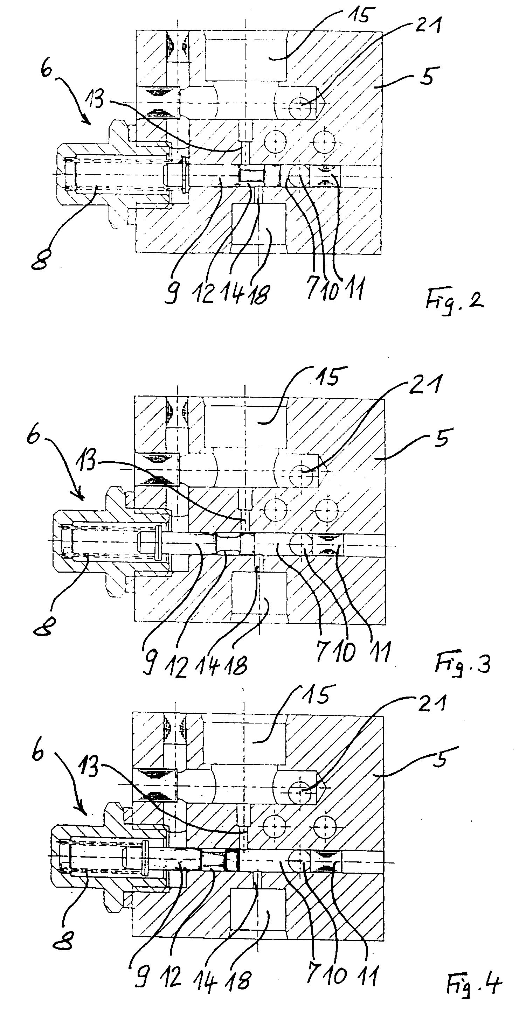

Figur 1 zeigt ein in seiner Gesamtheit sehr kompakt ausgebildetes Zentralschmieraggregat mit einer als Zahnradpumpe ausgebildeten Schmierstoffpumpe 1, die Schmierstoff aus einem Schmiermittelbehälter 2 in Form einer mit Schmierstoff gefüllten Schmierstoffkartusche zu sechs Schmierstoffverteilern 3 führt. Die Schmierstoffverteiler 3 sind in bekannter Weise als Kolbenverteiler ausgebildet, d.h. sie werden von der Schmierstoffpumpe mit Schmierstoff versorgt und fördern nach Druckentlastung unter Federkrafteinwirkung eine ihrer Einstellung entsprechende genau dosierte Schmierstoffmenge zu den jeweiligen Schmierstellen. Zum Antrieb der Schmierstoffpumpe 1 dient ein Elektromotor 4, zwischen dem und der Schmierstoffpumpe 1 ein sogenannter Ventilblock angeordnet ist, der ein Gehäuse 5 für ein kombiniertes Druckentlastungs- und Druckbegrenzungsventil 6 formt, dessen Aufbau und Wirkungsweise anhand der Figuren 2 bis 4 näher erläutert werden.

Das kombinierte Druckentlastungs- und Druckbegrenzungsventil 6 weist einen in einer Bohrung 7 gegen die Wirkung einer Rückstellfeder 8 hin- und herverschiebbar geführten Kolben 9 auf, der über einen Kanal 10 von der Schmierstoffpumpe 1 mit Fließfett beaufschlagt wird, sobald diese in Betrieb gesetzt wird. Letzteres geschieht in von den Betriebsbedingungen des zu schmierenden Fahrzeuges abhängenden Intervallen. Die Bohrung 7 ist an ihrem dem Kolben 9 gegenüberliegenden Ende durch einen Stopfen 11 verschlossen. Arbeitet die Schmierstoffpumpe 1 nicht, so nimmt das Ventil 6 die in Figur 2 dargestellte Position ein, in der über eine Ringnut 12 des Kolbens 9 Kanäle 13,14 miteinander in Verbindung stehen, von denen der Kanal 13 in eine Aufnahme 15 für ein Mundstück 16 mündet, das mit dem Schmierstoffbehälter 2 in Verbindung steht, und zwar dergestalt, daß es das eigentliche Mundstück 17 der Schmierstoffkartusche gewissermaßen verlängert. Der Kanal 14 steht demgegenüber mit einer Aufnahme 18 in Verbindung, in die das Mundstück 19 eines Anschlußteiles 20 ragt, das den Ventilblock 5 mit einer Leitung zu den Schmierstoffverteilern 3 verbindet.

Läuft die Schmierstoffpumpe 1 an, so saugt sie über einen Kanal 21 Fließfett aus dem Schmierstoffbehälter 2 an und drückt ihn in die Bohrung 7. Der Kolben 9 wird dabei in die in Figur 3 dargestellte Position bewegt, in der er den Kanal 13 abschottet. In dieser Position bleibt er so lange, bis alle Schmierstoffverteiler 3 mit Fließfett versorgt sind. Ist letzteres der Fall, d.h. können die Dosierkammern der Schmierstoffverteiler kein weiteres Fließfett mehr aufnehmen und läuft die Schmierstoffpumpe 1 weiter, so kommt es zu einer Drucksteigerung in der Bohrung 7 und zu einer weiteren Verlagerung des Kolbens 9 in die Position gemäß Figur 4. In der zuletzt genannten Position hat der Kolben 9 den Kanal 13 wieder freigegeben und die Schmierstoffpumpe 1 kann mithin Fließfett zurück in den Schmierstoffbehälter 2 fördern, bis sie abgeschaltet wird. Nach dem Abschalten der Pumpe baut sich innerhalb kürzester Frist der Druck in der Bohrung 7 ab und der Kolben 9 geht in die in Figur 2 dargestellte Position zurück. Die Schmierstoffverteiler 3 können nach der Druckentlastung in der Versorgungsleitung in bekannter Weise die in ihnen zuvor gespeicherte dosierte Schmierstoffmenge zu den ihnen jeweils zugeordneten Schmierstellen fördern.

## Patentansprüche

1. Zentralschmieraggregat für Fahrzeuge mit einem Schmierstoffbehälter (2), einer eingangsseitig mit dem Schmierstoffbehälter (2) und ausgangsseitig mit mindestens einem Schmierstoffverteiler (3) verbundenen Schmierstoffpumpe (1) sowie mit Mitteln zur Druckentlastung des Schmierstoffverteilers (3) und zur Begrenzung des von der Schmierstoffpumpe (1) aufgebauten Druckes, dadurch **gekennzeichnet**, daß die Mittel zur Druckentlastung aus einem auch zur Druckbegrenzung dienenden Ventil (6) bestehen, das einen gegen die Wirkung einer Rückstellfeder (8) in einer Bohrung (7) eines Gehäuses (5) verschiebbaren Kolben (9) aufweist, der in einer ersten Position einen zum Schmierstoffbehälter (2) führenden ersten Kanal (13) mit einem zum Schmierstoffverteiler (3) führenden zweiten Kanal (14), in einer zweiten Position einen zum Pumpenausgang führenden dritten Kanal (10) unter Schließen des zum Schmierstoffbehälter (2) führenden ersten Kanals (13) mit dem zum Schmierstoffverteller (3) führenden zweiten Kanal (14) und in einer dritten Position alle drei vorgenannten Kanäle (10,13,14) miteinander verbindet.

2. Zentralschmieraggregat nach Anspruch 1, dadurch gekennzeichnet, daß der Kolben (9) mit einer Ringnut (12) versehen ist, über die der erste und der zweite Kanal (13,14) in der zweiten Position des Kolbens (9) miteinander verbunden sind.

3. Zentralschmieraggregat nach Anspruch 1 oder 2, dadurch gekennzeichnet, daß das Gehäuse (5) für das Entlastungs- und Druckbegrenzungsventil (6) von einem Ventilblock mit einer Aufnahme (15) für ein mit dem Schmierstoffbehälter (2) in Verbindung stehendes Mundstück (16) und einer Aufnahme (18) für das Mundstück (19) eines Anschlußteiles (20) einer Leitung zum Schmierstoffverteiler (3) versehen ist.

## Claims

1. A centralized lubrication system for vehicles, with a lubricant reservoir (2), a lubricant pump (1) connected on the input side to the lubricant reservoir (2) and on the output side to at least one lubricant distributor (3), together with means to relieve the pressure of the lubricant distributor (3) and to limit the pressure built up by the lubricant pump (1), characterised in that the means for pressure relief comprises a valve (6) which also serves to limit pressure, which is provided with a piston (9) which is displaceable in a bore-hole (7) of a housing (5) against the action of a return spring (8) and which in a first position connects a first channel (13) leading to the lubricant reservoir (2) with a second channel (14) leading to the lubricant distributor (3), in a second position connects a third channel (10) leading to a pump output to the second channel (14) leading to the lubricant distributor (3), whilst closing the first channel (13) leading to the lubricant reservoir (2), and in a third position connects all three aforementioned channels (10, 13, 14) to one another.

2. A centralized lubrication system according to claim 1, characterised in that the piston (9) is provided with an annular groove (12) to facilitate connection of the first and second channels (13, 14) to each other in the second position of the piston (9).

3. A centralized lubrication system according to claim 1 or claim 2, characterised in that the housing (5) for the pressure relief and pressure limiting valve (6) of a valve block is provided with a receptacle (15) for an orifice (16) connected to the lubricant reservoir (2) and a receptacle (18) for the orifice (19) of a connecting piece (20) of a line to the lubricant distributor (3).

## Revendications

1. Unité centralisée de lubrification pour véhicules automobiles comportant un réservoir de lubrifiant (2), une pompe à lubrifiant (1) raccordée côté entrée au réservoir de lubrifiant (2) et côté sortie à au moins un distributeur de lubrifiant (3) ainsi que des moyens pour détendre le distributeur de lubrifiant (3) et limiter la pression appliquée par la pompe à lubrifiant (1), caractérisée en ce que les moyens de détente sont constitués également d'une soupape (6) servant également à limiter la pression, qui présente un piston (9) qui peut se déplacer à l'encontre de l'action d'un ressort de rappel (8) dans un alésage (7) d'un boîtier (5) et qui raccorde, dans une première position, un premier canal (13) menant au réservoir de lubrifiant (2) avec un deuxième canal (14) menant au distributeur de lubrifiant (3), dans une deuxième position, un troisième canal (10) menant à la sortie de la pompe, par fermeture du premier canal (13) menant au réservoir de lubrifiant (2), avec le deuxième canal (14) menant au distributeur de lubrifiant (3) et, dans une troisième position, les trois canaux mentionnés (10, 13, 14) les uns avec les autres.

2. Unité centralisée de lubrification selon la revendication 1, caractérisée en ce que le piston (9) est pourvu d'une rainure annulaire, (12), par laquelle le premier et le deuxième canaux (13, 14) sont raccordés l'un à l'autre dans la deuxième position du piston (9).

3. Unité centralisée de lubrification selon la revendication 1 ou 2, caractérisée en ce que le boîtier (5) est équipé, pour la soupape de détente et de limitation de pression (6), d'un bloc soupape avec un logement (15) pour un embout (16) en communication avec le réservoir de lubrifiant (2) et un logement (18) pour l'embout (19) d'une pièce de raccord (20) d'une conduite menant au réservoir de lubrifiant (3).
